# EUROPÄISCHE PATENTSCHRIFT

(11) **EP 2 600 276 B1**
(45) Veröffentlichungstag und Bekanntmachung des Hinweises auf die Patenterteilung: **29.10.2014**
(21) Anmeldenummer: 12169434.3
(22) Anmeldetag: 25.05.2012
(51) Int. Cl.: G06K 7/00, G06K 7/10, H01Q 1/22, H01Q 7/00

(54) **Vorrichtung mit einem RFID-Reader**
Device with a RFID reader
Dispositif avec un lecteur RFID

(30) Priorität: 02.12.2011 DE 102011055970; 24.05.2012 DE 202012101901 U
(43) Veröffentlichungstag der Anmeldung: 05.06.2013
(73) Patentinhaber: Feig Electronic GmbH, 35781 Weilburg (DE)
(72) Erfinder: Rödig, Michael, 35580 Wetzlar (DE); Gratzki, Torsten, 45219 Essen (DE); Wennrich, Andreas, 65556 Limburg-Staffel (DE)
(74) Vertreter: Knefel, Cordula

(56) Entgegenhaltungen:
- EP-A2- 1 521 206
- US-A1- 2007 063 820
- US-A1- 2008 238 687
- FINKENZELLER KLAUS: "RFID-Handbuch, Grundlagen und praktische Anwendungen induktiver Funkanlagen, Transponder und kontaktloser Chipkarten, CHAPTER 11 - LESEGERAETE", RFID HANDBUCH, HANSER VERLAG, MUENCHEN, DE, 26. September 2002 (2002-09-26), Seiten 319-339, XP002445050,

## Beschreibung

Die Erfindung betrifft einen RFID-Reader, insbesondere eine Schreib-/Lesevorrichtung eines RFID-Systems zur kontaktlosen Datenübertragung, insbesondere zum Lesen und Beschreiben von kontaktlosen Datenträgern, so genannten Transpondern. Die Erfindung betrifft darüber hinaus eine Vorrichtung mit einem RFID-Reader.

Ein RFID-Reader - oder auch Schreib-/Lesevorrichtung genannt - eines RFID-Systems besteht gemäß dem Stand der Technik aus einer RFID-Antenne, die sich aus mindestens einer Antennenschleife, die eine Induktivität darstellt, und aus einer oder mehreren Windungen gebildet wird, und einer Anpassschaltung zusammensetzt. Diese Antenne ist mit einer Schreib-/Lesestation verbunden, die eine Sende-, Empfänger- und Steuereinheit aufweist. Die RFID-Antenne und die Schreib-/Lesestation bilden dabei häufig eine bauliche Einheit und werden als RFID-Reader bezeichnet.

Die RFID-Antenne eines RFID-Systems hat folgende Aufgaben: Einerseits die Übertragung von Energie an den Transponder und andererseits die Übertragung von Daten an und vom Transponder. Die Energie- und Datenübertragung basiert auf der magnetischen Kopplung der Wechselfelder des Readers und des Transponders im Nahbereich der Antenne. Dabei hat die Geometrie der RFID-Antenne entscheidenden Einfluss auf die Kopplung zum Transponder. Die für einen Transponder wirksame magnetische Feldstärke in einem definierten Abstand zur RFID-Antenne hängt unter anderem ab vom Strom, der durch die Antenne fließt, und von der Größe der RFID-Antenne.

Eine Anforderung an eine RFID-Antenne ist die Energieübertragung zum Transponder. Dazu wird die RFID-Antenne ihrerseits durch einen Sender mit Energie versorgt. Um die Leistung optimal von einer Endstufe der Sendeeinheit des Readers in die Antenne zu übertragen, müssen Endstufe und RFID-Antenne den gleichen Eingangs- beziehungsweise Ausgangswiderstand (Impedanz) besitzen. Eine RFID-Antenne benötigt also eine bestimmte Eingangsimpedanz, damit die Energie von der Endstufe optimal zur Antenne übertragen wird.

Ferner muss die Reader-Antenne möglichst gut auf die Betriebsfrequenz des RFID-Systems abgestimmt sein, um einen hohen Strom und damit eine hohe magnetische Feldstärke zu erzielen.

Zur Anpassung der Eingangs- beziehungsweise Ausgangsimpedanz und zum Abgleich der Reader-Antenne auf die Betriebsfrequenz dient eine Anpassschaltung, die sich in der Regel in unmittelbarer Nähe zur Antenne befindet.

Aus der Praxis sind Transponder bekannt, die aus einem integrierten Mikroelektronikbauelement (IC) und einem Resonanzkondensator und einer Antennenspule bestehen, wobei der Resonanzkondensator häufig bereits in das Mikroelektronikbauelement integriert ist. Die Antennenspule und der Resonanzkondensator bilden einen elektrischen Schwingkreis und werden auf ihre Betriebsfrequenz von zum Beispiel 13,56 Megahertz (MHz) abgestimmt.

Gelangt ein Transponder in den Erfassungsbereich der RFID-Antenne, so erhält der Transponder über die magnetische Kopplung mit der Antenne Energie zum Betrieb der integrierten Schaltung (IC). Die Höhe der Energie ist abhängig von der Feldstärke beziehungsweise Anzahl der Feldlinien, die den Transponder durchdringen, und dem Winkel der Feldlinien zum Transponder. Ist die Energie groß genug, wird das Mikroelektronikbauelement in den Grundzustand versetzt und beginnt zu arbeiten.

Der Bereich, in dem der Transponder ausreichend mit Energie versorgt wird und mit dem RFID-System kommunizieren kann, wird Erfassungsbereich genannt.

Wird das Umfeld einer abgeglichenen RFID-Antenne verändert, indem die RFID-Antenne beispielsweise in der Nähe einer Metallplatte montiert wird, so wird diese RFID-Antenne durch dieses Umfeld verstimmt, das heißt, die Antenne arbeitet nicht mehr auf dem zuvor abgeglichenen Arbeitspunkt. Durch diese Veränderung des Umfeldes der RFID-Antenne wird die Kommunikation mit Transpondern negativ beeinflusst, weil in der Antenne nicht mehr die maximal mögliche Energie zur Verfügung steht.

Für RFID-Reader gibt es vielfältige Einsatzmöglichkeiten. So werden RFID-Reader beispielsweise für Zutrittskontrollsysteme, Ticketingsysteme, in Bibliotheken und Logistik-Anwendungen und in elektronischen Bezahlsystemen eingesetzt. Dabei werden RFID-Reader an Hauswänden oder in Automaten und Terminals montiert oder in mobile Geräte integriert. RFID-Reader findet man heute beispielsweise an Fahrscheinautomaten, an Getränkeautomaten oder an Drehsperren zu Freizeiteinrichtungen und so weiter. Dabei werden RFID-Reader häufig im direkten Umfeld von metallischen oder anderweitig leitfähigen Materialien betrieben. Eine Anforderung an den RFID-Reader ist es somit, dass er in unterschiedlichen Umfeldern betrieben werden kann und sich möglichst gut in das jeweilige Umfeld integrieren lässt. Seine Bauform muss also so gewählt werden, dass er möglichst einfach in andere Geräte, beispielsweise Terminals, integriert werden kann und dabei unabhängig von der Einbauumgebung optimal funktionieren kann.

Ein Einsatzgebiet sind die so genannten Bezahlsysteme. Für diese Bezahlsysteme existiert das "EMV®* Contactless Specifications for Payment Systems, Book D, EMV Contactless Communication Protocol Specification Version 2.1, March 2011" (nachfolgend auch EMVco Spezifikation genannt), welches von den gängigen Anbietern von Kreditkarten festgelegt wurde und entsprechend einzuhalten ist.

Die EMVco Spezifikation definiert ein "Operating Volume", also einen Bereich über der RFID-Antenne, in der eine Mindestfeldstärke erreicht werden muss, aber eine maximal zulässige Feldstärke nicht überschritten werden darf. Zudem definiert die EMVco Spezifikation die vom RFID-Reader generierten Signalformen innerhalb des Operating Volume für die Kommunikation mit einem Transponder.

Aus der Praxis sind Vorrichtungen bekannt, mit denen eine RFID-Antenne manuell oder automatisch auf ihren optimalen Arbeitspunkt abgeglichen werden kann. Diese Vorrichtungen haben jedoch den Nachteil, dass sie relativ aufwändig sind und für kleine, preiswerte RFID-Reader nicht wirtschaftlich anwendbar sind oder ihre Handhabung aufwändig ist und zum exakten Abgleich geschultes Personal und teure Messinstrumente benötigt werden.

Aus der Praxis sind darüber hinaus RFID-Reader bekannt, die auf die Oberfläche eines Gerätes, beispielsweise eines Kassenautomaten aufgeschraubt werden können. Damit die RFID-Antennen dieser RFID-Reader auch auf metallischem Untergrund montiert werden können, ist zwischen RFID-Antenne und Montagefläche häufig ein Ferritmaterial angeordnet, welches die Antenne gegen den metallischen Untergrund abschirmt. Diese Bauform des aufgesetzten RFID-Readers hat den Nachteil, dass sich die RFID-Reader nicht in das Erscheinungsbild des Automaten einfügen und nur schwer gegen Vandalismus geschützt werden können.

Zum Stand der Technik gehören RFID-Reader, die der EMVco Spezifikation entsprechen und ein Gehäuse aufweisen, welches für die Montage auf ebenen Oberflächen konzipiert ist. Die Gehäuse dieser RFID-Reader haben beispielsweise eine Fläche von 70 Millimetern mal 60 Millimetern und eine Dicke von 18 Millimetern oder eine Fläche von 100 Millimetern mal 70 Millimetern und eine Dicke von 16 Millimetern und erfüllen die Anforderungen an die Feldstärke und Signalformen der EMVco Spezifikation, solange sie nicht auf einen metallischen Untergrund montiert werden. Durch die Montage auf einen metallischen Untergrund werden diese Antennen der zum Stand der Technik zählenden RFID-Reader jedoch verstimmt und die Antenne induziert einen großen Teil der abgegebenen Leistung in den metallischen Untergrund, so dass weder die nach EMVco Spezifikation geforderte minimale Feldstärke an allen Stellen des Operating Volume messbar ist, noch die Signalformen der EMVco Spezifikation entsprechen. Selbst wenn man die Antenne eines solchen RFID-Readers wieder auf den metallischen Untergrund abstimmen würde, die Antenne also wieder in ihrem Arbeitspunkt arbeiten würde, erreichen diese RFID-Reader nicht die geforderte minimale Feldstärke in dieser Einbausituation, obwohl die Antennen dieser zum Stand der Technik zählenden RFID-Reader einen Abstand zum metallischen Untergrund von mehr als 10 Millimetern aufweisen.

Eine Antenne eines RFID-Readers mit einer Antennenfläche von beispielsweise 65 Millimetern mal 55 Millimetern benötigt zum Erreichen der nach der EMVco Spezifikation geforderten minimalen Feldstärke am oberen Rand des Operating Volume eine Sendeleistung von ungefähr 250 Milliwatt (mW), wenn die Antenne nicht durch Metall beeinflusst wird. Nähert man diese Antenne einem metallischen Untergrund auf 10 Millimeter, benötigt der RFID-Reader bereits ungefähr 600 Milliwatt, um die minimale Feldstärke am oberen Rand des Operating Volume zu erreichen.

Das der Erfindung zugrunde liegende technische Problem besteht darin, einen RFID-Reader anzugeben, der sich aufgrund seiner Geometrie einfach in unterschiedliche Geräte (Terminals) integrieren lässt und der gleichzeitig unabhängig vom umgebenden Material verwendet werden kann und dabei einen hohen Schutz gegen Vandalismus bietet. Darüber hinaus soll eine Vorrichtung mit einem RFID-Reader angegeben werden, die ebenfalls einen hohen Schutz vor Vandalismus aufweist.

US 2008/238687 A offenbart eine Vorrichtung gemäß den Merkmalen des Oberbegriffes von Anspruch 1.

Dieses technische Problem wird durch eine Vorrichtung mit einem RFID-Reader mit den Merkmalen gemäß Anspruch 1 gelöst.

Die erfindungsgemäße Vorrichtung mit einem RFID-Reader mit wenigstens einer RFID-Antenne und wenigstens einer Anpassschaltung, wobei die RFID-Antenne im Inneren eines Readergehäuses angeordnet ist, wobei der RFID-Reader in einer Ausnehmung eines Gehäuses der Vorrichtung angeordnet ist, wobei das Vorrichtungsgehäuse der Vorrichtung aus einem elektrisch leitfähigen Material gebildet ist, wobei die wenigstens eine RFID-Antenne in einer von dem Vorrichtungsgehäuse gebildeten Ebene angeordnet ist, oder bei der die wenigstens eine RFID-Antenne innerhalb des Vorrichtungsgehäuses angeordnet ist, oder bei der die RFID-Antenne an der von der von dem Vorrichtungsgehäuse gebildeten Ebene angrenzend angeordnet ist, zeichnet sich dadurch aus, dass der RFID-Reader als ein gemäß der "EMV®* Contactless Specifications for Payment Systems, Book D, EMV Contactless Communication Protocol Specification, Version 2.1, March 2011" arbeitender RFID-Reader ausgebildet ist, dass der RFID-Reader eine Sendeleistung von mehr als 400 Milliwatt aufweist, dass eine Güte für die RFID-Antenne in einem Bereich zwischen Q=12 und Q=20 liegt, dass der im eingebauten Zustand von außen sichtbare Teil des Readergehäuses des RFID-Readers eine maximale Abmessung von 85 Millimetern mal 85 Millimetern oder einen maximalen Durchmesser von 85 Millimetern aufweist, und dass die wenigstens eine RFID-Antenne an einer oder mehreren oder allen Stellen (A, A', A" , A"'), an denen die RFID-Antenne einen geringsten Abstand zu einem Schirmring, der die wenigstens eine RFID-Antenne umlaufend ummantelt, oder zu dem Vorrichtungsgehäuse aufweist, einen Abstand zu dem Schirmring oder zu dem Vorrichtungsgehäuse von zwei bis acht Millimetern aufweist.

Die erfindungsgemäße Vorrichtung mit einem RFID-Reader weist durch diese Merkmale den Vorteil auf, dass der RFID-Reader aufgrund seiner geometrischen Form sehr gut in verschiedenen Vorrichtungen integriert werden kann. Durch die Anordnung der Antenne in der von dem Vorrichtungsgehäuse gebildeten Ebene, an der Ebene oder innerhalb des Vorrichtungsgehäuses schließt das Readergehäuse flächenbündig oder fast flächenbündig ab, so dass ein sehr guter Schutz vor Vandalismus gegeben ist.

Weiterhin weist die erfindungsgemäße Vorrichtung mit einem RFID-Reader eine Sendeleistung von mehr als 400 Milliwatt auf, und eine Güte Q für die RFID-Antenne liegt in einem Bereich zwischen Q=12 und Q=20.

Die Sendeleistung des erfindungsgemäßen RFID-Readers beträgt mehr als 400 Milliwatt und typischerweise weniger als 1 Watt. Mit einer Sendeleistung von mehr als 1 Watt kann die Aufgabenstellung der Erfindung zwar auch erreicht werden, hätte aber einen unwirtschaftlich hohen Aufwand für Bauteile zur Folge und würde eine aufwändige und unökonomische Spannungsversorgung benötigen.

Eine Antenne mit einer zu hohen Güte Q ist zwar in der Lage, mit geringer Ausgangsleistung eine hohe Feldstärke zu erzeugen, hat aber eine hohe Zeitkonstante und kann darum keine schnellen Impulse übertragen.

Die Güte Q für eine Antenne des erfindungsgemäßen RFID-Readers liegt in einem Bereich zwischen Q=12 und Q=20. Eine geringere Güte würde eine hohe Sendeleistung voraussetzen, um den Minimalwert für die Feldstärke zu erzielen. Mit einer höheren Güte können die Anforderungen an die Modulationsimpulse nicht erreicht werden.

Darüber hinaus erfüllt die erfindungsgemäße Vorrichtung mit einem RFID-Reader die Anforderungen gemäß der EMVco Spezifikation, das heißt, dass er eine Mindestfeldstärke im oberen Randbereich eines Operating Volume erreicht, dass er die maximal zulässige Feldstärke innerhalb des Operating Volume nicht überschreitet und dass die vorgegebenen Signalformen innerhalb des Operating Volume eingehalten werden.

Diese Bedingungen sind in dem genannten Protokoll gemäß der EMVco Spezifikation vorgegeben, und zwar sind die verschiedenen Definitionen auf den Seiten 4 und 5 aufgelistet. Auf Seite 17 ist der "TEST PICC" (Proximity IC Card = PICC) zur Ermittlung der Feldstärke und Messung von Signalformen beschrieben. Auf der Seite 18 ist die Landing Plane beschrieben, das heißt der Bereich, in den die Prüfvorrichtung gebracht werden muss. Auf den Seiten 18 und 19 ist eine prinzipielle Beschreibung des Operating Volume angegeben. Auf der Seite 199 ist das Operating Volume mit der Definition der geometrischen Abmessungen beschrieben.

Auf den Seiten 200 und 201 ist unter der Überschrift "RF Power and Signal Interface" die Definition der minimalen und maximalen Feldstärken angegeben, das heißt der Spannungen, die innerhalb des Operating Volume mit dem "TEST PICC" gemessen werden müssen.

Die Ermittlung der Feldstärke erfolgt durch Messung einer Spannung am "EMC - TEST PICC" (Messtransponder zur Ermittlung der Feldstärke und Messung von Signalformen), der innerhalb des Operating Volume bewegt wird. Dabei stellt der TEST PICC eine definierte Last für das vom PCD (Proximity Coupling Device), welche der Schreib-/Lesestation oder dem Reader entspricht, generierte elektromagnetische Feld dar, wobei das PCD eine Spannung in das "TEST PICC" induziert, die als äquivalent für die Feldstärke an einem Ausgang des "TEST PICC" gemessen werden kann.

Die "PCD Requirements for Modulation PCD to PICC - Type A" definieren die Anforderungen an die Signalformen, die das PCD für ISO/IEC 14443 Typ A Transponder generieren muss, wobei diese Anforderungen wiederum für das gesamte Operating Volume gelten (Tabelle A.2).

Die "PCD Requirements for Modulation PCD to PICC - Type B" definieren die Anforderungen an die Signalformen, die das PCD für ISO/IEC 14443 Typ B Transponder generieren muss, wobei diese Anforderungen wiederum für das gesamte Operating Volume gelten (Tabelle A.2).

Auf Seite 202 sind die "Set-Up Values for Test Equipment" genannt, die die zu messenden Grenzwerte zu "PCD Requirements for Modulation PCD to PICC - Type A" und "PCD Requirements for Modulation PCD to PICC - Type B" definieren.

Die erfindungsgemäße Vorrichtung mit einem RFID-Reader weist also den Vorteil auf, dass er die EMVco Spezifikation hinsichtlich der Feldstärke und der Signalformen einhält, darüber hinaus ist er sehr klein gebaut und kann dabei in Vorrichtungen mit einem elektrisch leitfähigen Vorrichtungsgehäuse eingebaut werden.

Das elektrisch leitfähige Vorrichtungsgehäuse wird in der Regel aus Metall bestehen. Es ist jedoch auch möglich, dass das Vorrichtungsgehäuse aus Kohlefaserwerkstoffen gebildet ist.

Gemäß einer vorteilhaften Ausführungsform ist die wenigstens eine RFID-Antenne von einem Schirmring umlaufend ummantelt. Hierdurch wird der RFID-Reader nicht von dem Material der Umgebung, also dem Vorrichtungsgehäuse beeinflusst. Der Schirmring wird am vorteilhaftesten dann eingesetzt, wenn das Vorrichtungsgehäuse aus einem nicht elektrisch leitfähigen Material besteht.

Die relevanten Parameter für den RFID-Reader sind:
1. die Geometrie der Antenne (Abmessung, Form, Leiterbahndicke, Abstand zu der Abschirmung),
2. die Geometrie und der Aufbau der Abschirmung,
3. die elektrische Dimensionierung der Antenne (Antennengüte),
4. die Ausgangsleistung des RFID-Readers.

Durch die erfindungsgemäße Kombination dieser Parameter bei dem RFID-Reader ist es erstmals möglich, den RFID-Reader so auszugestalten, dass er die EMVco Spezifikation erfüllt und trotzdem die Antenne nahe dem Gehäuse der Vorrichtung angeordnet ist, so dass das Gehäuse des RFID-Readers nicht oder kaum über dem Gehäuse der Vorrichtung übersteht und damit gut gegen Vandalismus geschützt ist. Die zum Stand der Technik gehörenden RFID-Reader stehen entweder deutlich über dem Vorrichtungsgehäuse über oder erfüllen nicht die EMVco Spezifikation.

Die Antenne des RFID-Readers erfüllt nämlich die gestellten Aufgaben am einfachsten, umso größer die Readergehäusefläche ist.

Da die erfindungsgemäße Vorrichtung mit einem RFID-Reader vorzugsweise in Bezahlsystemen an Automaten eingesetzt werden soll, soll der im eingebauten Zustand von außen sichtbare Teil vorteilhaft nicht größer als 100 Millimeter mal 100 Millimeter oder im Durchmesser nicht größer als 100 Millimeter sein.

Der gesamte RFID-Reader ist größer als der von außen sichtbare Teil, da der RFID-Reader vorteilhaft Mittel zum Anordnen des RFID-Readers in einer Vorrichtung aufweist. Diese Mittel können beispielsweise ein Flansch sein, durch den der RFID-Reader größer wird als der sichtbare Teil des RFID-Readers.

Eine bevorzugte Ausführungsform der Erfindung sieht vor, dass der im eingebauten Zustand von außen sichtbare Teil des Readergehäuses des RFID-Readers nicht größer als 85 Millimeter mal 85 Millimeter oder im Durchmesser nicht größer als 85 Millimeter ist.

Eine kleine Antenne hat jedoch den Nachteil, dass eine geringere Kopplung zwischen Reader-Antenne und Transponder-Antenne vorliegt. Es besteht ein geometrischer Zusammenhang zwischen der Reader-Antenne und der Transponder-Antenne.

Gemäß der EMVco Spezifikation wird die Feldstärke mit einem Messtransponder gemessen, dessen Abmessungen einer Scheckkarte entsprechen. Eine Reader-Antenne mit einer ähnlichen Geometrie führt zu einer guten Kopplung.

Wird ein Transponder dicht an eine Reader-Antenne gehalten, bilden beide Schwingkreise einen gekoppelten Schwingkreis. Eine zu gute Kopplung hat dabei den Nachteil, dass der Transponder-Schwingkreis den Antennen-Schwingkreis stark beeinflusst. Die Reader-Antenne wird verstimmt mit der Folge, dass sich die Signalformen (Modulationsimpulse) verändern.

Der Schirmring hat die Aufgabe eines virtuellen Metallgehäuses. Das heißt, der Schirmring wirkt bereits ähnlich wie ein Metallgehäuse oder eine Metallfrontplatte einer Vorrichtung, in die der Reader eingebaut wird. Damit ist die Antenne bereits vor dem Einbau auf die Umgebungsbedingungen abgestimmt, in der sie nach dem Einbau arbeiten muss.

Der Durchmesser der RFID-Antenne beträgt vorteilhaft außen weniger als 80 Millimeter und innen mehr als 50 Millimeter. Vorteilhaft beträgt der Durchmesser der RFID-Antenne 70 Millimeter außen und 60 Millimeter innen.

Vorteilhaft weist die wenigstens eine RFID-Antenne einen Schirmring mit einer Materialstärke von wenigstens 0,5 Millimetern und maximal 1 Millimeter auf. Bevorzugt sind 0,8 Millimeter.

Eine weitere vorteilhafte Ausführungsform der Erfindung sieht vor, dass das Readergehäuse des RFID-Readers eine Wandstärke von minimal 2,5 Millimetern und maximal 4 Millimetern aufweist. Besonders bevorzugt sind 3,5 Millimeter.

Das Readergehäuse ist geschlossen oder an der der Vorrichtung zugewandten Seite offen ausgebildet. Auf jeden Fall ist eine Frontfläche des Readergehäuses geschlossen ausgebildet.

Zu der Verwirklichung der kleinen Bauform ist es darüber hinaus vorteilhaft, dass die wenigstens eine RFID-Antenne an einer oder mehreren oder allen Stellen, an denen die RFID-Antenne den geringsten Abstand zu dem Schirmring oder zu dem Vorrichtungsgehäuse aufweist, einen Abstand von 2 bis 8 Millimetern zum Abschirmring oder zu dem Vorrichtungsgehäuse aufweist.

Grundsätzlich ist es vorteilhaft, den Abstand zwischen Antenne und Schirmring oder Vorrichtungsgehäuse möglichst groß zu wählen. Es besteht auch die Möglichkeit, den Schirmring außen auf dem Readergehäuse des RFID-Readers anzuordnen.

Gemäß einer weiteren vorteilhaften Ausführungsform der Erfindung ist der RFID-Reader der Vorrichtung dadurch gekennzeichnet, dass der Schirmring innerhalb des Gehäuses des RFID-Readers angeordnet ist, und dass der Schirmring Abmessungen von mindestens 70 Millimetern mal 70 Millimetern und maximal 85 Millimetern mal 85 Millimetern aufweist.

Das Readergehäuse des RFID-Readers ist vorteilhaft im Querschnitt quadratisch, rund, rechteckig, elliptisch oder vieleckig ausgebildet. Es ist auch möglich, andere Formen vorzusehen.

Die wenigstens eine RFID-Antenne kann in runder, quadratischer, rechteckiger oder vieleckiger Form in dem RFID-Reader angeordnet sein. Auch hier sind andere Formen möglich.

Eine besonders bevorzugte Ausführungsform der Erfindung sieht vor, dass die Antenne eine runde Form und der Schirmring oder das Readergehäuse eine quadratische Form aufweist. Die runde Form der Antenne hat den Vorteil, dass eine runde Antenne ein sehr homogenes Feld erzeugt. Die runde Antenne in dem quadratischen Schirmring oder dem quadratischen Readergehäuse hat den Vorteil, dass der Abstand zwischen der Antenne und dem Schirmring oder dem Vorrichtungsgehäuse, dessen Ausnehmung an das Readergehäuse angepasst ausgebildet ist, zumindest in den Ecken maximal groß ist, womit sich die Feldlinien der Antenne gut in den Fernbereich ausbreiten können.

Vorteilhaft ist die wenigstens eine RFID-Antenne in einem Readergehäuse angeordnet und das Readergehäuse weist eine Flanschplatte auf. Durch diese Ausführungsform lässt sich der RFID-Reader in einfacher Art und Weise in oder an einem Vorrichtungsgehäuse montieren.

Vorteilhaft ist bei dem erfindungsgemäßen RFID-Reader ein Readergehäuse mit einer geschlossenen Frontseite und eine mit dem Readergehäuse verbundene quadratische oder zumindest rechteckähnliche Flanschplatte vorgesehen, wobei das Readergehäuse mit seiner Frontseite von hinten durch einen runden Ausschnitt einer Frontplatte eines Gehäuses einer Vorrichtung hindurchragt, was einer Durchsteckmontage entspricht. Die Frontseite des Readergehäuses und die Außenseite der Frontplatte der Vorrichtung schließen wenigstens annähernd flächenbündig miteinander ab oder das Readergehäuse des RFID-Readers steht um eine Wandstärke des Readergehäuses über dem Vorrichtungsgehäuse über. Das Readergehäuse wird über die Flanschplatte im Inneren mit der Frontplatte der Vorrichtung (Terminal) verschraubt. Im Readergehäuse ist erfindungsgemäß die mindestens eine RFID-Antenne angeordnet.

Die RFID-Antenne und/oder elektronische Komponenten sind vorteilhaft in einer Kunststoffmasse eingebettet. Hierdurch ist gewährleistet, dass die RFID-Antenne und/oder die elektronischen Komponenten gegen Umwelteinflüsse geschützt sind und nicht so schnell verschleißen.

Unter Vorrichtung wird im Folgenden beispielsweise eine Vorrichtung für Zutrittskontrollsysteme, Ticketingsysteme, in Bibliotheken und Logistik-Anwendungen verstanden. Besonders bevorzugt ist die erfindungsgemäße Vorrichtung als elektronisches Bezahlsystem ausgebildet. Die Vorrichtung kann auch als Fahrscheinautomat, als Getränkeautomat oder als Drehsperre zu Freizeiteinrichtungen und so weiter ausgebildet sein. Die Vorrichtung kann auch für andere Anwendungen ausgebildet sein.

Die erfindungsgemäße Vorrichtung weist einen erfindungsgemäßen RFID-Reader auf. Das heißt, die Vorrichtung weist einen RFID-Reader auf, der sämtliche beschriebenen Merkmale und Vorteile einzeln oder in Kombination aufweisen kann.

Durch die Ausbildung, dass der RFID-Reader in dem Vorrichtungsgehäuse angeordnet ist und dass die wenigstens eine RFID-Antenne in einer von dem Vorrichtungsgehäuse gebildeten Ebene angeordnet ist oder innerhalb des Vorrichtungsgehäuses angeordnet ist oder an der von der von dem Vorrichtungsgehäuse gebildeten Ebene angrenzend angeordnet ist, steht das Readergehäuse des RFID-Readers nur minimal oder überhaupt nicht über dem Vorrichtungsgehäuse über und ist somit gut gegen Vandalismus geschützt.

Vorteilhaft ist der RFID-Reader derart in dem Vorrichtungsgehäuse angeordnet, dass das Readergehäuse des RFID-Readers lediglich um eine Materialstärke des Gehäuses des RFID-Readers über das Vorrichtungsgehäuse übersteht. Diese Ausbildung bietet ebenfalls einen guten Schutz gegen Vandalismus.

Eine zylinderförmige Bauform des Readergehäuses hat den Vorteil, dass die benötigte Montagefläche in Bezug auf den Durchmesser der RFID-Antenne optimal ausgenutzt wird, weil die für einen Transponder wirksam nutzbare Feldstärke bei einer runden RFID-Antenne nahezu identisch ist zu einer quadratischen Antenne mit der Kantenlänge, die dem Durchmesser der runden Antenne entspricht.

Vorteilhaft weist die Flanschplatte eine rechteckige Grundfläche auf.

Die quadratische oder rechteckförmige Flanschplatte hat den Vorteil, dass sie in den Ecken Vorrichtungen zur Montage der RFID-Reader an der Montagefläche aufweist, die beispielsweise als Bohrungen ausgeführt werden. Durch die Kombination eines zylindrischen Körpers, der auf einen quadratischen oder rechteckigen Grundkörper aufgesetzt ist, wird der verfügbare Montageort für die RFID-Antenne oder den RFID-Reader optimal ausgenutzt.

Gemäß einer weiteren vorteilhaften Ausführungsform der Erfindung ist das Readergehäuse des RFID-Readers von wenigstens einem Schirmring an einem Mantel des Readergehäuses umschlossen ausgebildet. Der Schirmring kann dabei außen auf das Readergehäuse aufgebracht sein oder an der Innenseite des Readergehäuses angeordnet sein oder in das Readergehäuse integriert sein. Der Schirmring ist in jedem Fall so angeordnet, dass er die innenliegende RFID-Antenne ummantelt, und zwar in einem Abstand, der möglichst groß ist. Darüber hinaus kann der Schirmring eine axiale Länge aufweisen, die mindestens der Dicke des Gehäuses der Vorrichtung entspricht. Der Schirmring kann auch eine axiale Länge aufweisen, die der axialen Länge des Readergehäuses entspricht. Es sind auch andere Längen möglich.

Gemäß dieser vorteilhaften Ausführungsform kann der Schirmring als ein Band oder Ring aus Metall oder einem Ferritmaterial ausgebildet sein. Diese Ausführungsform hat den Vorteil, dass die RFID-Antenne des RFID-Readers bereits werkseitig auf eine metallische Umgebung abgestimmt werden kann und der Abgleich der RFID-Antenne unabhängig vom Einbauort ist.

Gemäß der Erfindung ist das Readergehäuse an der Frontseite geschlossen ausgebildet, um die RFID-Antenne und die gesamte Vorrichtung zu schützen.

Die Geometrie des Readergehäuses ist anwendungsabhängig, je nachdem, in welche Vorrichtung die erfindungsgemäße Vorrichtung mit einem RFID-Reader eingebaut werden soll. In dem der Vorrichtung zugewandten Teil des Readergehäuses können beispielsweise elektronische Komponenten des RFID-Readers und beispielsweise Anschlussstecker oder Anschlussklemmen angeordnet sein.

Der RFID-Reader wird vorteilhaft in einer Art Durchsteckmontige in einer entsprechenden Ausnehmung eines Vorrichtungsgehäuses der Vorrichtung angeordnet. Hierbei wird das Readergehäuse durch die Bohrung gesteckt und die Flanschplatte liegt bündig an der Innenwand des Vorrichtungsgehäuses der Vorrichtung an. Die Flanschplatte kann anschließend fest mit dem Vorrichtungsgehäuse der Vorrichtung verbunden, beispielsweise verschraubt werden.

Eine weitere vorteilhafte Ausführungsform sieht eine Justagevorrichtung vor, mit der die Frontseite des Readergehäuses derart justierbar ist, dass das Readergehäuse der Vorrichtung und die Frontseite des Readergehäuses des RFID-Readers wenigstens annähernd flächenbündig miteinander abschließend ausgebildet sind.

Diese Ausführungsform hat den Vorteil, dass der RFID-Reader flächenbündig in Vorrichtungen mit unterschiedlich dicken Wandstärken einbaubar ist.

Durch die Durchsteckmontage des Readergehäuses und dem mindestens nahezu flächenbündigen Abschluss des Readergehäuses mit dem Vorrichtungsgehäuse der Vorrichtung wird ein sehr guter Schutz gegen Vandalismus und eine sehr gute Einpassung in das optische Erscheinungsbild der Vorrichtung erreicht, in die die erfindungsgemäße Vorrichtung mit einem RFID-Reader eingebaut wird.

Gemäß einer besonders bevorzugten Ausführungsform der Erfindung ist auf der Rückseite des RFID-Readers, das heißt auf der dem Vorrichtungsgehäuse zugewandten Seite vorzugsweise im Bereich der Antenne eine Abschirmfolie oder Abschirmplatte, beispielsweise eine Ferritfolie oder Ferritplatte angeordnet.

Der Durchmesser der Abschirmfolie oder der Abschirmplatte ist vorteilhaft etwas größer als der Durchmesser der Antenne. Die Abschirmschicht dient dazu, die Feldlinien, die zwischen Antenne und Abschirmring verlaufen, möglichst verlustarm zum Zentrum der Antenne zurückzuführen. Aufgrund der hohen Permeabilität beziehungsweise dem geringen magnetischen Widerstand von dem Abschirmmaterial beziehungsweise von dem Ferrit wird das von der Antenne erzeugte elektromagnetische Feld um die Antenne gebündelt.

Die Ausgangsleistung des RFID-Readers ist mit verantwortlich für die erzielbare Feldstärke der Antenne.

Dabei ist zu beachten, dass die Feldstärke innerhalb des von der EMVco Spezifikation geforderten Operating Volume einen definierten Minimalwert erreichen muss, aber einen definierten Maximalwert nicht überschreiten darf.

Mit einer zu großen Sendeleistung kann man zwar den Minimalwert erreichen, würde aber den Maximalwert überschreiten. Diese Bedingungen werden von der erfindungsgemäßen Vorrichtung mit einem RFID-Reader erfüllt.

Da die EMVco Spezifikation sehr genau die zulässigen Grenzen für Modulationsimpulse (Flankensteilheit und Kontinuität) der amplitudenmodulierten Signale, die vom Reader oder PCB an den Transponder/PICC gesendet werden, definiert, muss die Antennengüte entsprechend so gewählt werden, dass diese Modulationsimpulse zur EMVco Spezifikation konform sind. Es besteht ein direkter Zusammenhang zwischen Ausgangsleistung und Antenne.

Weitere Merkmale und Vorteile der Erfindung ergeben sich anhand der zugehörigen Zeichnung, in der mehrere Ausführungsbeispiele eines RFID-Readers nur beispielhaft dargestellt sind. In der Zeichnung zeigen:
- Fig. 1: die Frontansicht einer Ausführungsform eines RFID-Readers;
- Fig. 2: die Seitenansicht einer Ausführungsform eines RFID-Readers;
- Fig. 3: einen Längsschnitt durch eine Ausführungsform eines RFID-Readers im eingebauten Zustand gemäß der Linie III-III der Fig. 1;
- Fig. 4: einen Teilschnitt durch eine Ausführungsform eines RFID-Readers mit Justagevorrichtung im eingebauten Zustand;
- Fig. 5: einen Längsschnitt durch eine weitere Ausführungsform eines RFID-Readers mit Justagevorrichtung im eingebauten Zustand;
- Fig. 6: ein geändertes Ausführungsbeispiel im Längsschnitt;
- Fig. 7: ein geändertes Ausführungsbeispiel im Längsschnitt;
- Fig. 8: ein geändertes Ausführungsbeispiel im Längsschnitt;
- Fig. 9: einen erfindungsgemäßen RFID-Reader in Draufsicht.

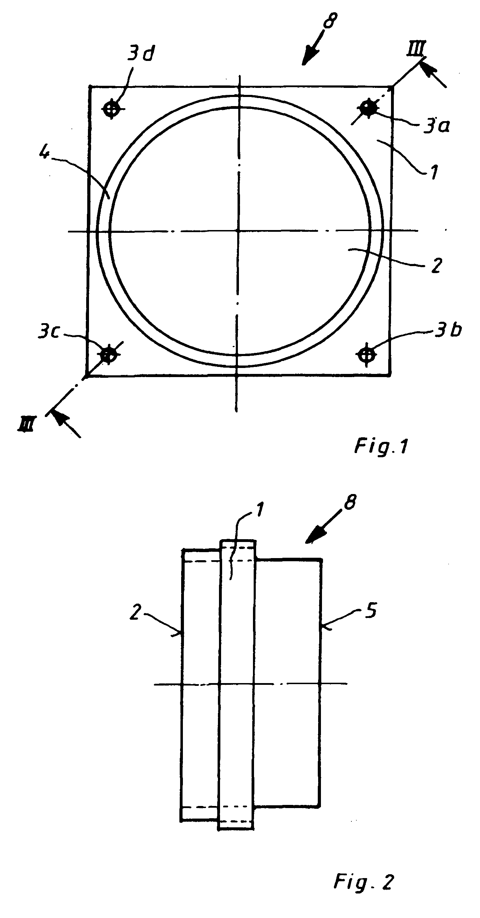

Fig. 1 zeigt beispielhaft eine Frontansicht einer Ausführungsform eines erfindungsgemäßen RFID-Readers 8. Dabei ist ein zylinderförmiges Readergehäuse 2 mit einer quadratischen Flanschplatte 1 verbunden, wobei die Kantenlänge der Flanschplatte 1 nur geringfügig größer ist als der Durchmesser des Readergehäuses 2. In den vier Ecken der Flanschplatte 1 ist jeweils ein Anschraubpunkt 3a, 3b, 3c, 3d vorgesehen. Über die Anschraubpunkte 3a, 3b, 3c, 3d kann der RFID-Reader mit der Montageplatte verschraubt werden. Die Flanschplatte 1 ist umlaufend an dem Readergehäuse 2 angeordnet und mit dieser fest verbunden.

Das zylinderförmige Readergehäuse 2 ist in diesem Ausführungsbeispiel zusätzlich durch einen Schirmring 4 umschlossen, der aus einem metallischen Werkstoff oder Ferrit hergestellt sein kann.

Fig. 2 zeigt beispielhaft eine Seitenansicht eines erfindungsgemäßen RFID-Readers 8. In dieser Ansicht ist die Anordnung des zylinderförmigen Readergehäuses 2 und der Flanschplatte 1 zu sehen. Ferner zeigt Fig. 2 ein hinteres Teil 5 des Readergehäuses 2. Die Geometrie des hinteren Teiles 5 des Readergehäuses 2 ist anwendungsabhängig. In dem hinteren Teil 5 des Readergehäuses 2 können weitere elektronische Komponenten des RFID-Readers 8 und beispielsweise Anschlussstecker oder Anschlussklemmen (nicht dargestellt) angeordnet sein. Das Readergehäuse 2 ist an der dem Vorrichtungsgehäuse 7 abgewandten Seite offen ausgebildet.

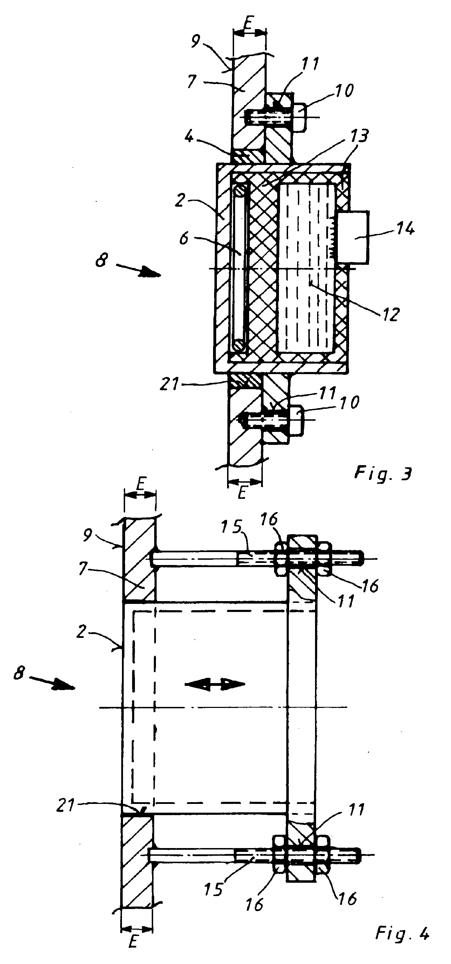

Fig. 3 zeigt einen Schnitt durch einen in ein Vorrichtungsgehäuse 7 eines Terminals (nicht dargestellt) eingebauten erfindungsgemäßen RFID-Reader 8, wobei die Frontseite des RFID-Readers 8 nahezu flächenbündig mit einer Außenseite des Vorrichtungsgehäuses 7 abschließt. Das Readergehäuse 2 steht lediglich um eine Wandstärke des Readergehäuses 2 über dem Vorrichtungsgehäuse 7 über. Im Inneren des RFID-Readers 8 ist eine RFID-Antenne 6 angeordnet, wobei die RFID-Antenne 6 im zylinderförmigen Readergehäuse 2 platziert ist. Die Flanschplatte 1 ist mit dem Readergehäuse 2 wiederum fest verbunden, beispielsweise sind die Flanschplatte 1 und das Readergehäuse 2 miteinander verschweißt ausgebildet oder als einstückiges Teil beispielsweise in einem Spritzgussverfahren oder Sinterverfahren hergestellt. Die Schrauben 10 greifen durch Bohrungen 11 der Flanschplatte 1.

Die im Inneren des Readergehäuses 2 liegende RFID-Antenne 6 und alle weiteren elektronischen Komponenten 12 sind in eine Kunststoffmasse 13 eingebettet, aus der lediglich die Anschlussstecker 14 herausragen. Die Fig. 3 zeigt ebenfalls einen Schirmring 4, der die ringförmige RFID-Antenne 6 ringförmig umlaufend ummantelt. Die Flanschplatte 1 ist mit Schrauben 10 mit dem Vorrichtungsgehäuse 7 verschraubt.

Durch die Einbettung der elektronischen Komponenten in eine Kunststoffmasse 13 wird ein sehr guter Schutz gegen Vandalismus und Umwelteinflüsse erzielt.

Die RFID-Antenne 6 ist in einer von dem Vorrichtungsgehäuse 7 der Vorrichtung 9 gebildeten Ebene E angeordnet. Durch diese Ausführungsform steht das Readergehäuse 2 des RFID-Readers 8 lediglich um eine Materialstärke des Readergehäuses 2 über das Vorrichtungsgehäuse 7 der Vorrichtung über. Der RFID-Reader 8 ist in einer Ausnehmung 21 des Vorrichtungsgehäuses 7 angeordnet.

Fig. 4 zeigt ein Ausführungsbeispiel eines erfindungsgemäßen RFID-Readers 8. Die Fig. 4 zeigt eine Anordnung des zylinderförmigen Readergehäuses 2 und der Flanschplatte 1. Bei dieser Ausführungsform ist die Flanschplatte 1 beabstandet zu der Innenseite des Vorrichtungsgehäuses 7 angeordnet, in welches der RFID-Reader 8 montiert ist. Die Flanschplatte 1 wird über Muttern 16 auf Gewindebolzen 15 gehalten, wobei über die Position der Muttern 16 auf den Gewindebolzen 15 eine Justage der Frontseite des RFID-Readers für einen flächenbündigen Einbau in die Vorrichtung erfolgen kann. Die Gewindebolzen 15 sind fest mit dem Readergehäuse 7 verbunden, beispielsweise verschweißt.

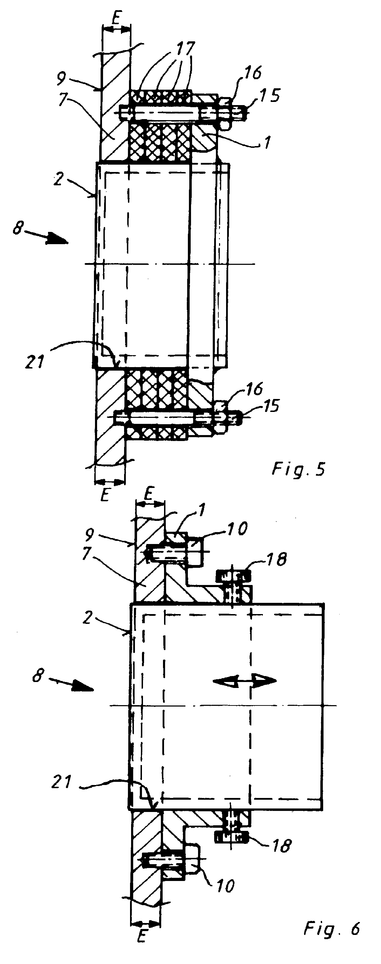

Fig. 5 zeigt ein weiteres Ausführungsbeispiel eines erfindungsgemäßen RFID-Readers 8. In Fig. 5 ist wiederum die Anordnung des zylinderförmigen Readergehäuses 2 und der Flanschplatte 1 dargestellt. Auch in dieser Ausführungsform ist die Flanschplatte 1 beabstandet zu der Innenseite des Vorrichtungsgehäuses 7 angeordnet, in welches der RFID-Reader 8 montiert ist. Die Flanschplatte 1 wird über zwischengelegte Distanzstücke 17 mittels Gewindebolzen 15 gehalten, wobei über die Dicke und Anzahl der Distanzstücke 17 eine Justage der Frontseite des RFID-Readers 8 für einen flächenbündigen Einbau in das Vorrichtungsgehäuse 7 erfolgen kann. Diese Ausführungsform hat den Vorteil, dass eine gute Dichtigkeit zwischen RFID-Reader 8 und Vorrichtungsgehäuse 7 hergestellt werden kann.

Fig. 6 zeigt ein weiteres Ausführungsbeispiel eines erfindungsgemäßen RFID-Readers 8. In Fig. 6 ist wiederum die Anordnung des zylinderförmigen Readergehäuses 2 und der Flanschplatte 1 zu sehen. Die Flanschplatte 1 ist über Schrauben 18 an dem RFID-Reader fixiert (Flanschfixierung). Anstelle der Schrauben 18 kann die Flanschfixierung auch als Klemmvorrichtung (nicht dargestellt) ausgeführt werden. Die Flanschplatte 1 liegt dabei direkt an der Innenseite des Vorrichtungsgehäuses 7 an, in dem der RFID-Reader 8 montiert ist. Durch Lösen der Flanschfixierung 18 kann eine Justage der Frontseite des RFID-Readers 8 für einen flächenbündigen Einbau in das Vorrichtungsgehäuse 7 erfolgen.

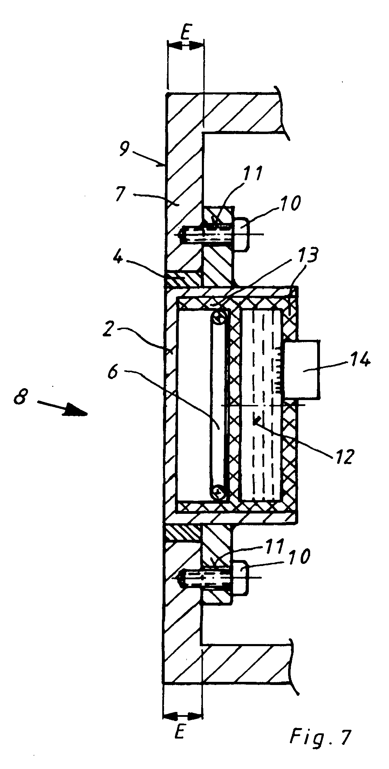

Fig. 7 zeigt einen RFID-Reader 8, der in der gleichen Art und Weise wie gemäß Fig. 3 in dem Vorrichtungsgehäuse 7 eingebaut ist. Gleiche Teile sind mit gleichen Bezugszahlen beziffert. Die Befestigung des RFID-Readers 8 ist analog zu der in Fig. 3 beschriebenen Befestigung. Der RFID-Reader 8 ist jedoch derart aufgebaut, dass die Antenne 6 innerhalb der Vorrichtung, die durch das Vorrichtungsgehäuse 7 gebildet ist, angeordnet ist. Das heißt, dass die Antenne 6 nicht in der Ebene E liegt. Durch diese Ausbildung ist es möglich, dass das Readergehäuse 2 flächenbündig mit dem Vorrichtungsgehäuse 7 abschließt.

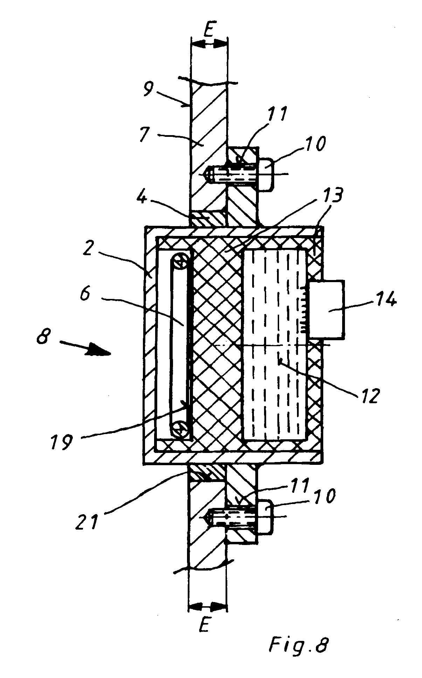

Fig. 8 zeigt einen RFID-Reader 8, der in der gleichen Art und Weise wie gemäß Fig. 3 in dem Vorrichtungsgehäuse 7 eingebaut ist. Gleiche Teile sind mit gleichen Bezugszahlen beziffert. Die Befestigung des RFID-Readers 8 ist analog zu der in Fig. 3 beschriebenen Befestigung. Die Ebene E, die durch das Vorrichtungsgehäuse 7 gebildet wird, weist eine Begrenzungslinie 19 auf, die in Fig. 8 gestrichelt dargestellt ist. Die Begrenzungslinie 19 verläuft in der Ausnehmung 21 des Vorrichtungsgehäuses 7. Die Antenne 6 ist an der Begrenzungslinie 19 anliegend ausgebildet. Hierdurch ist gewährleistet, dass das Readergehäuse 2 nicht zu weit über dem Vorrichtungsgehäuse 7 übersteht und damit noch ausreichend gegen Vandalismus geschützt ist.

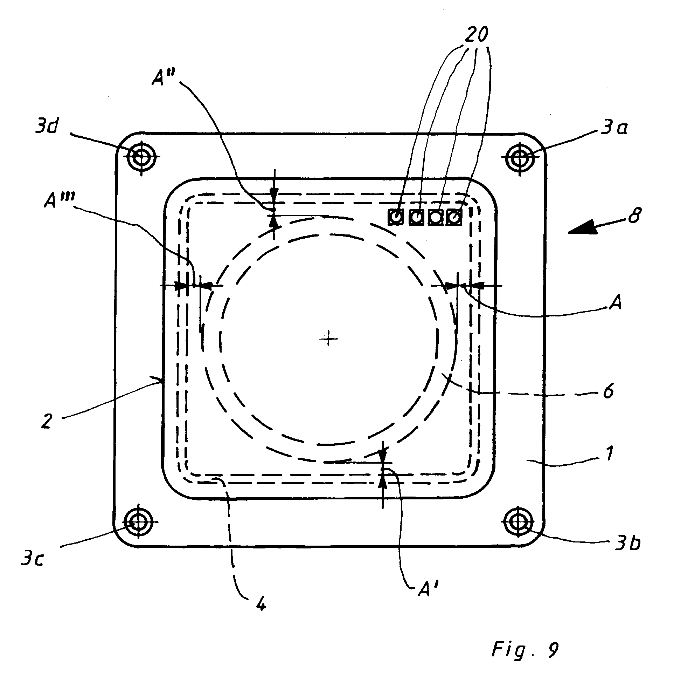

Fig. 9 zeigt einen RFID-Reader 8 mit einer Antenne 6 sowie einem Schirmring 4. Die Flanschplatte 1 wie auch der Schirmring 4 sind quadratisch ausgebildet, während die Antenne 6 eine runde Form aufweist. Ist der RFID-Reader 8 eingebaut in eine Vorrichtung (in Fig. 7 nicht dargestellt), ist der vordere Teil vom Readergehäuse 2 sichtbar, während der Flansch 1 nicht sichtbar ist. In der Oberfläche des RFID-Readers 8 sind vier LEDs 20 angeordnet.

Der RFID-Reader 8 weist die RFID-Antenne 6 auf. An der Stelle A ist der Abstand zwischen der Antenne 6 und dem Schirmring 4, oder wenn der Schirmring 4 fehlt, dem Vorrichtungsgehäuse 7, der kleinste Abstand. An der Stelle A soll der Abstand zwischen der Antenne 6 und dem Schirmring 4 oder dem Vorrichtungsgehäuse 7 möglichst klein sein. Je nach Geometrie gibt es mehrere Stellen A bei einem RFID-Reader. Im vorliegenden Fall sind es insgesamt vier Stellen A, A' A", A"'.

### Bezugszahlen

- 1: Flanschplatte
- 2: Readergehäuse
- 3a: Anschraubpunkt
- 3b: Anschraubpunkt
- 3c: Anschraubpunkt
- 3d: Anschraubpunkt
- 4: Schirmring
- 5: hinteres Teil des Readergehäuses 2
- 6: RFID-Antenne
- 7: Vorrichtungsgehäuse
- 8: RFID-Reader
- 9: Außenseite des Vorrichtungsgehäuses 7
- 10: Schrauben
- 11: Bohrungen in der Flanschplatte 1
- 12: Elektronik
- 13: Kunststoffmasse
- 14: Anschlussstecker
- 15: Gewindebolzen
- 16: Mutter
- 17: Distanzstücke
- 18: Schrauben (Flanschfixierung)
- 19: Begrenzungslinie
- 20: LEDs
- 21: Ausnehmung
- E: Ebene
- A: Abstand
- A': Abstand
- A'': Abstand
- A''': Abstand

## Patentansprüche

1. Vorrichtung mit einem RFID-Reader mit wenigstens einer RFID-Antenne und wenigstens einer Anpassschaltung, wobei die RFID-Antenne im Inneren eines Readergehäuses (2) angeordnet ist, wobei der RFID-Reader in einer Ausnehmung eines Gehäuses einer Vorrichtung angeordnet ist, wobei das Vorrichtungsgehäuse der Vorrichtung aus einem elektrisch leitfähigen Material gebildet ist, wobei die wenigstens eine RFID-Antenne (6) in einer von dem Vorrichtungsgehäuse (7) gebildeten Ebene (E) angeordnet ist, oder bei der die wenigstens eine RFID-Antenne (6) innerhalb des Vorrichtungsgehäuses (7) angeordnet ist, oder bei der die RFID-Antenne (6) an der von der von dem Vorrichtungsgehäuse (7) gebildeten Ebene (E) angrenzend angeordnet ist, **dadurch gekennzeichnet, dass** der RFID-Reader als ein gemäß der "EMV®* Contactless Specifications for Payment Systems, Book D, EMV Contactless Communication Protocol Specification, Version 2.1, March 2011" arbeitender RFID-Reader ausgebildet ist, dass der RFID-Reader (8) eine Sendeleistung von mehr als 400 Milliwatt aufweist, dass eine Güte (Q) für die RFID-Antenne (6) in einem Bereich zwischen Q=12 und Q=20 liegt, dass der im eingebauten Zustand von außen sichtbare Teil des Readergehäuses (2) des RFID-Readers (8) eine maximale Abmessung von 85 Millimetern mal 85 Millimetern oder einen maximalen Durchmesser von 85 Millimetern aufweist, und dass die wenigstens eine RFID-Antenne (6) an einer oder mehreren oder allen Stellen (A, A', A", A'''), an denen die RFID-Antenne (6) einen geringsten Abstand zu einem Schirmring, der die wenigstens eine RFID-Antenne (6) umlaufend ummantelt, oder zu dem Vorrichtungsgehäuse (7) aufweist, einen Abstand zu dem Schirmring (4) oder zu dem Vorrichtungsgehäuse (7) von zwei bis acht Millimetern aufweist.

2. Vorrichtung nach Anspruch 1, **dadurch gekennzeichnet, dass** die RFID-Antenne (6) in dem Readergehäuse (2) angeordnet ist, und dass der RFID-Reader (8) derart in dem Vorrichtungsgehäuse (7) angeordnet ist, dass das Readergehäuse (2) des RFID-Readers (8) lediglich um eine Materialstärke des Readergehäuses (2) des RFID-Readers (8) über das Vorrichtungsgehäuse (7) übersteht.

3. Vorrichtung mit einem RFID-Reader nach Anspruch 1, **dadurch gekennzeichnet, dass** der Durchmesser der RFID-Antenne (6) außen weniger als 80 Millimeter und innen mehr als 50 Millimeter beträgt.

4. Vorrichtung mit einem RFID-Reader nach Anspruch 1 oder 3, **dadurch gekennzeichnet, dass** das Readergehäuse (2) der Vorrichtung mit einem RFID-Reader (8) im Querschnitt quadratisch, rund, rechteckig, elliptisch oder vieleckig ausgebildet ist.

5. Vorrichtung mit einem RFID-Reader nach einem der Ansprüche 1, 3 bis 4, **dadurch gekennzeichnet, dass** die wenigstens eine Antenne (6) in runder, quadratischer, rechteckiger oder vieleckiger Form in der Vorrichtung mit einem RFID-Reader (8) angeordnet ist.

6. Vorrichtung mit einem RFID-Reader nach einem der Ansprüche 1, 3 bis 5, **dadurch gekennzeichnet, dass** die RFID-Antenne (6) eine runde Form aufweist und der Schirmring (4) und/oder das Readergehäuse (2) eine quadratische Form aufweist.

7. Vorrichtung mit einem RFID-Reader nach einem der Ansprüche 1, 3 bis 6, **dadurch gekennzeichnet, dass** die wenigstens eine RFID-Antenne (6) in dem Readergehäuse (2) angeordnet ist, und dass das Readergehäuse (2) eine Flanschplatte (1) aufweist.

8. Vorrichtung mit einem RFID-Reader nach einem der Ansprüche 1, 3 bis 7, **dadurch gekennzeichnet, dass** die RFID-Antenne (6) und/oder elektronische Komponenten (12) im Inneren der Vorrichtung mit einem RFID-Reader (8) in eine Kunststoffmasse (13) eingebettet sind.

9. Vorrichtung mit einem RFID-Reader nach einem der Ansprüche 1, 3 bis 8, **dadurch gekennzeichnet, dass** die Vorrichtung mit einem RFID-Reader (8) im Bereich der wenigstens einen RFID-Antenne (6) auf der der Vorrichtung zugewandten Seite eine Abschirmfolie oder Abschirmplatte aufweist.

10. Vorrichtung mit einem RFID-Reader nach Anspruch 9, **dadurch gekennzeichnet, dass** die Abschirmfolie oder Abschirmplatte als Ferritfolie oder Ferritplatte ausgebildet ist.

## Claims

1. A device with an RFID reader with at least one RFID antenna and at least one interface circuit, wherein the RFID antenna is arranged in the interior of a reader housing (2), wherein the RFID reader is arranged in a cutout in a housing of a device, wherein the device housing of the device is formed from an electrically conductive material, wherein the at least one RFID antenna (6) is arranged in a plane (E) formed by the device housing (7), or in which the at least one RFID antenna (6) is arranged within the device housing (7), or in which the RFID antenna (6) is arranged adjacent to the plane (E) formed by the by the device housing (7),
**characterised in that** the RFID reader is configured as an RFID reader which operates in accordance with the "EMV®* Contactless Specifications for Payment Systems, Book D, EMV Contactless Communication Protocol Specification Version 2.1, March 2011", **in that** the RFID reader (8) has a transmitting power of more than 400 milliwatts, **in that** a quality (Q) for the RFID antenna (6) lies in a range between Q=12 and Q=20, **in that** that part of the reader housing (2) of the RFID reader (8) which in the installed state is visible from the outside has a maximum dimension of 85 millimetres by 85 millimetres or a maximum diameter of 85 millimetres, and **in that** the at least one RFID antenna (6) at one or more or all the points (A, A', A", A"') at which the RFID antenna (6) is at a smallest distance from a shield ring which encloses the at least one RFID antenna (6) in circumambient manner, or from the device housing (7), is at a distance from the shield ring (4) or from the device housing (7) of two to eight millimetres.

2. A device according to Claim 1, **characterised in that** the RFID antenna (6) is arranged in the reader housing (2), and **in that** the RFID reader (8) is arranged in the device housing (7) such that the reader housing (2) of the RFID reader (8) projects across the device housing (7) merely by a material thickness of the reader housing (2) of the RFID reader (8).

3. A device with an RFID reader according to Claim 1, **characterised in that** the diameter of the RFID antenna (6) is less than 80 millimetres externally and internally more than 50 millimetres.

4. A device with an RFID reader according to Claim 1 or 3, **characterised in that** the reader housing (2) of the device with an RFID reader (8) is formed to be square, round, rectangular, elliptical or polygonal in cross-section.

5. A device with an RFID reader according to one of Claims 1, 3 to 4, **characterised in that** the at least one antenna (6) is arranged in round, square, rectangular or polygonal form in the device with an RFID reader (8).

6. A device with an RFID reader according to one of Claims 1, 3 to 5, **characterised in that** the RFID antenna (6) has a round form and the shield ring (4) and/or the reader housing (2) has a square form.

7. A device with an RFID reader according to one of Claims 1, 3 to 6, **characterised in that** the at least one RFID antenna (6) is arranged in the reader housing (2), and **in that** the reader housing (2) has a flange plate (1).

8. A device with an RFID reader according to one of Claims 1, 3 to 7, **characterised in that** the RFID antenna (6) and/or electronic components (12) in the interior of the device with an RFID reader (8) are embedded in a plastics compound (13).

9. A device with an RFID reader according to one of Claims 1, 3 to 8, **characterised in that** the device with an RFID reader (8) in the region of the at least one RFID antenna (6) on the side facing the device has a shielding foil or shielding plate.

10. A device with an RFID reader according to Claim 9, **characterised in that** the shielding foil or shielding plate is formed as a ferrite foil or ferrite plate.

## Revendications

1. Dispositif avec un lecteur RFID avec au moins une antenne RFID et au moins un circuit d'adaptation, l'antenne RFID étant disposée à l'intérieur d'un boîtier de lecteur (2), le lecteur RFID étant disposé dans un évidement d'un boîtier d'un dispositif, le boîtier du dispositif étant constitué d'un matériau électro-conducteur, l'au moins une antenne RFID (6) étant disposée dans un niveau (E) formé par le boîtier du dispositif (7), ou dans lequel l'au moins une antenne RFID (6) étant disposée à l'intérieur du boîtier du dispositif (7) ou dans lequel l'antenne RFOD (6) est adjacente au niveau (E) formé par le boîtier du dispositif (7), **caractérisé en ce que** le lecteur RFID est conçu comme un lecteur RFID fonctionnant conformément aux « EMV® Contactless Specifications for Payment Systems, Book D, EMV Contactless Communication Protocol Specification Version 2.1, March 2011 », **en ce que** le lecteur RFID (8) présente une puissance d'émission supérieure à 400 milliwatts, **en ce qu'**une qualité (Q) pour l'antenne RFID (6) se trouve entre Q=12 et Q=20, **en ce que** la partie du boîtier (2) du lecteur RFID (8), visible de l'extérieur dans l'état monté, présente des dimensions maximales de 85 millimètres par 85 millimètres ou un diamètre maximal de 85 millimètres et **en ce que** l'au moins une antenne RFID (6) présente, au niveau d'un ou plusieurs ou au niveau de tous les endroits (A, A', A", A"') auxquels l'antenne RFID (6) présente la distance la plus faible par rapport à une bague de blindage qui entoure l'au moins une antenne RFID (6) ou par rapport au boîtier du dispositif (7), ou présente une distance par rapport à la bague de blindage (4) ou au boîtier du dispositif (7) de deux à huit millimètres.

2. Dispositif selon la revendication 1, **caractérisé en ce que** l'antenne RFID (6) se trouve dans le boîtier du lecteur (2) et **en ce que** le lecteur RFID (8) est disposé dans le boîtier du dispositif (7) de façon à ce que le boîtier (2) du lecteur RFID (8) dépasse du boîtier du dispositif (7) de seulement d'une épaisseur de matériau du boîtier (2) du lecteur RFID (8).

3. Dispositif avec un lecteur RFID selon la revendication 1, **caractérisé en ce que** le diamètre extérieur de l'antenne RFID (6) est inférieur à 80 millimètres et le diamètre intérieur est supérieur à 50 millimètres.

4. Dispositif avec un lecteur RFID selon la revendication 1 ou 3, **caractérisé en ce que** le boîtier de lecteur (2) du dispositif est conçu avec un lecteur RFID (8) de section carrée, ronde, rectangulaire, elliptique ou polygonale.

5. Dispositif avec un lecteur RFID selon l'une des revendications 1, 3 à 4, **caractérisé en ce que** l'au moins une antenne RFID (6) est disposée sous une forme ronde, carrée, rectangulaire ou polygonale dans le dispositif avec un lecteur RFID (8).

6. Dispositif avec un lecteur RFID selon l'une des revendications 1, 3 à 5, **caractérisé en ce que** l'antenne RFID (6) présente une forme ronde et la bague de blindage (4) et/ou le boîtier du lecteur (2) présente une forme carrée.

7. Dispositif avec un lecteur RFID selon l'une des revendications 1, 3 à 6, **caractérisé en ce que** l'au moins une antenne RFID (6) se trouve dans le boîtier du lecteur (2) et **en ce que** le boîtier du lecteur (2) comprend une plaque de bridage (1).

8. Dispositif avec un lecteur RFID selon l'une des revendications 1, 3 à 7, **caractérisé en ce que** l'antenne RFID (6) et/ou les composants électroniques (12) sont intégrés à l'intérieur du dispositif avec un lecteur RFID (8) dans une masse de matière plastique (13).

9. Dispositif avec un lecteur RFID selon l'une des revendications 1, 3 à 8, **caractérisé en ce que** le dispositif avec un lecteur RFID (8) présente, au niveau de l'au moins une antenne RFID (6), sur le côté orienté vers le dispositif, un film ou une plaque de blindage.

10. Dispositif avec un lecteur RFID selon la revendication 9, **caractérisé en ce que** le film ou la plaque de blindage est conçue comme un film ou une plaque de ferrite.
